# FASCICULE DE BREVET EUROPEEN

(11) **EP 0 827 998 B1**
(45) Date de publication et mention de la délivrance du brevet: **22.05.2002**
(21) Numéro de dépôt: 97402075.2
(22) Date de dépôt: 08.09.1997
(51) Int. Cl.: C10B 53/02, C10L 9/02, C10B 7/10, C10B 53/00

(54) **Système pour la valorisation de matières organiques de récupération**
System zur Verwertung von organischen Abfallmaterialien
System for the valorization of organic waste

(30) Priorité: 09.09.1996 FR 9610953
(43) Date de publication de la demande: 11.03.1998
(73) Titulaire: D.T.E., 13100 Aix-en-Provence (FR)
(72) Inventeur: de la Forterie, Michel, 75007 Paris (FR)
(74) Mandataire: CABINET BONNET-THIRION

(56) Documents cités:
- EP-A- 0 025 319
- EP-A- 0 529 203
- WO-A-95/25779
- GB-A- 2 114 014

## Description

La présente invention concerne un système pour la valorisation de matières organiques de récupération, notamment de bois de récupération.

Les matières organiques de récupération traitées selon la présente invention sont destinées plus particulièrement à la transformation par voie thermique en charbons, charbons actifs, hydrocarbures et gaz combustibles, des matières organiques d'origines diverses provenant des activités de fabrication, de démolition et/ou de récupération, et plus particulièrement des bois usés.

De façon habituelle dans leur mise en oeuvre, les bois sont traités en surface et/ou en profondeur par des produits chimiques destinés, entre autres applications, à faciliter la fabrication, à les protéger contre les intempéries, les insectes et les champignons. De ce fait les bois récupérés après usage sont, dans le cadre de la réglementation actuelle, impropres à une réutilisation dans les industries de transformation - panneaux de particules par exemple - ainsi qu'à une valorisation énergétique, par exemple en incinération. Actuellement ces bois sont mis en décharge mais l'évolution des réglementations interdira ce recours et impose de fait la mise en oeuvre de solutions nouvelles de traitement de valorisation donnant les garanties nécessaires quant à la protection de l'environnement.

D'une façon habituelle, le charbon de bois est obtenu par transformation thermique des bois bruts provenant d'exploitations forestières dans des fours maintenus à pression atmosphérique et où l'énergie thermique est apportée par combustion dans le four même d'une fraction des charbons produits. Le temps de traitement est long - dans certains cas plus de trente heures - et le processus opératoire, qui ne permet d'obtenir que les charbons à usage domestique, génère des résidus de transformation comme les goudrons qui sont des matières difficiles à mettre en oeuvre, les "jus pyroligneux" peu exploitables et les gaz appauvris par dilution par le dioxyde de carbone, la vapeur d'eau et l'air résiduel. La transformation des charbons domestiques en charbons actifs à usage industriel impose un traitement complémentaire dans une installation séparée. Les brevets WO-A-9 525 779 et EP-A-0 025 319 décrivent des pyrolyses de déchets.

Les systèmes utilisés actuellement ne permettent pas d'utiliser les bois usés ni en général des matières organiques pour obtenir des charbons, que ce soit à usage domestique ou industriel, car lesdits charbons seraient pollués, par exemple par les produits chimiques imprégnant les bois et donc impropres à l'utilisation recherchée.

Un objet de l'invention est de fournir un système pour la valorisation de matières organiques de récupération, par exemple, des bois usés, des pneumatiques, des matières plastiques, de la cellulose, des déchets ménagers.

Un autre objet de l'invention est de fournir un système permettant d'obtenir des charbons à usage domestique et des charbons actifs industriels à grande surface spécifique, parfaitement épurés et propres à utilisation.

Un autre objet de l'invention est encore de fournir un système permettant d'obtenir des hydrocarbures et des gaz, parfaitement épurés et pouvant être utilisés en centrale thermique à des fins de production d'énergie.

L'invention répond à tous ces objets et propose un système pour la valorisation de matières organiques de récupération composé d'un tunnel de carbonisation relié en amont à un tunnel de lessivage des matières organiques et en aval à un tunnel de refroidissement des charbons générés, cet ensemble de tunnels constituant un système statique étanche, maintenu en dépression sans entrée d'oxygène. L'énergie de transformation est apportée par des moyens extérieurs sans combustion des charbons dans le four. Le maintien d'une dépression permanente dans le système et l'absence d'oxygène favorise la formation d'hydrocarbures et de gaz directement utilisables comme combustibles.

Les objets, avantages et caractéristiques de l'invention, apparaîtront plus clairement à la lecture de la description ci-après.

Le système pour la valorisation de matières organiques de la présente invention comprend un ensemble de conception modulaire maintenu en dépression sans oxygène et il est caractérisé en ce que:
a) il comporte un tunnel de lessivage, comportant un cylindre de lessivage, où lesdites matières organiques sont entraînées et brassées, un tunnel de carbonisation, comportant un cylindre de carbonisation chauffé à haute température à l'extérieur de celui-ci, et où lesdites matières organiques sont entraînées et brassées pour être transformées en gaz et charbons chauds, et un tunnel de refroidissement, comportant un cylindre de refroidissement, où lesdits charbons chauds sont entraînés et brassés pour être refroidis, le cylindre de carbonisation étant chauffé à haute température à l'extérieur de celui-ci soit au moyen d'une double paroi dans laquelle on injecte de la fumée, soit au moyen de cordons chauffants, de serpentins, ou de tout autre système équivalent de chauffage externe;
b) le tunnel de lessivage et le tunnel de carbonisation sont reliés par un premier puits intermédiaire pourvu d'un distributeur rotatif;
c) le tunnel de carbonisation et le tunnel de refroidissement sont reliés par un deuxième puits intermédiaire pourvu d'un distributeur rotatif.

L'invention sera à présent décrite en référence à un mode de réalisation avantageux de l'invention, donné à titre d'exemple.

Le lessivage des matières organiques est obtenu par nettoyage superficiel par jet de vapeur à haute température et, dans la même opération, par enlèvement dans la masse des produits chimiques d'imprégnation, par déshydratation à coeur.

Le tunnel de lessivage comporte en sa partie amont un silo et en partie basse du silo, un cylindre sur lequel il est raccordé de façon étanche et dans lequel une vis sans fin à vitesse variable assure le transfert des matières organiques contenues dans le silo vers le tunnel de carbonisation. Le silo est composé de deux compartiments munis chacun d'une porte à l'entrée et d'une porte à la sortie. L'ouverture et fermeture alternées des portes des compartiments permettent une alimentation continue du cylindre de lessivage sans que ce dernier soit mis à l'air. Lors du transfert, les matières organiques brassées par la rotation de la vis sont soumises à des jets de vapeur d'eau à haute température qui assurent leur déshydratation et le lessivage à coeur pour l'élimination d'une grande partie des produits polluants, la vitesse de la vis pouvant être ajustée aux caractéristiques des matières organiques pour optimiser la durée de l'opération. Au terme du transfert dans le cylindre de lessivage, les matières organiques lessivées tombent dans un premier puits intermédiaire raccordé de façon étanche au tunnel de lessivage d'un côté et au tunnel de carbonisation de l'autre. La hauteur d'empilement des matières organiques dans le puits assure une perte de charge suffisante pour permettre la séparation des flux de vapeur d'eau d'un côté et des gaz de carbonisation de l'autre et assurer ainsi l'équilibrage des pressions sans transfert gazeux significatif. Le puits intermédiaire est raccordé au tunnel de carbonisation lui-même composé d'un cylindre dans lequel une vis sans fin à vitesse variable assure le transfert des matières organiques pendant l'opération de carbonisation. Le transfert thermique de carbonisation dans les bois, favorisé par le brassage par la vis d'entraînement, est assuré par le rayonnement de la paroi interne du cylindre, par conduction thermique au contact des matières organiques - paroi et par convection des gaz de carbonisation. Au terme du transfert, les matières organiques sont transformées en charbons qui sont déversés dans un deuxième puits intermédiaire raccordé de façon étanche au tunnel de carbonisation d'un côté et au tunnel de refroidissement de l'autre. La hauteur d'empilement des charbons assure une perte de charge suffisante pour permettre la séparation des flux gazeux de carbonisation d'un côté et de brouillard d'eau de refroidissement de l'autre et assurer ainsi l'équilibrage des pressions sans transfert gazeux significatif. Le deuxième puits intermédiaire est raccordé au tunnel de refroidissement lui-même composé d'un cylindre, dans lequel une vis sans fin à vitesse variable assure le transfert des charbons pendant l'opération de refroidissement, et d'un silo auquel le cylindre est raccordé. Les charbons sont lavés et refroidis par brumisation obtenue par injection d'eau sous pression. Au terme de l'opération de refroidissement, les charbons sont stockés en silo composé de deux compartiments munis chacun d'une porte à l'entrée et d'une porte à la sortie. L'ouverture et fermeture alternées des portes de chacun des compartiments permettent le déversement continu des charbons dans chacun des compartiments de façon alternée sans remise à l'air du cylindre de refroidissement. La brumisation sera précédée, selon les besoins et les caractéristiques des bois, d'une injection sur les charbons chauds, dans le deuxième puits intermédiaire, de vapeur d'eau à haute température dans le but d'obtenir la formation de charbons actifs à grande surface spécifique, l'élimination des derniers composés organiques volatils et compléter la dépollution des charbons.

Selon une disposition préférée de l'invention, le tunnel de carbonisation comporte un cylindre chauffé à haute température à l'extérieur de celui-ci. La température intérieure moyenne du tunnel est comprise entre 400°C et 600°C et à une pression absolue variant en fonction des dégagements gazeux entre 40 000 Pa et 90 000 Pa. Cette température intérieure du tunnel de carbonisation est obtenue par rayonnement de la paroi interne du cylindre portée à la température requise par circulation dans la double enveloppe de fumées à haute température.

Selon d'autres dispositions préférées de l'invention :
- le tunnel de carbonisation est constitué d'un cylindre à section circulaire;
- le tunnel de carbonisation est maintenu sans oxygène libre et en température par chauffage du cylindre de carbonisation par des fumées à haute température circulant dans la paroi, lesdites fumées à haute température étant par exemple générées par un canon de chauffage alimenté par les gaz, les huiles et les charbons produits par la carbonisation;
- les matières organiques sont soumises dans le tunnel de carbonisation à un rayonnement de la paroi du cylindre de carbonisation, par conduction lors du brassage des matières organiques et par convection des gaz de carbonisation qui se dégagent;
- les charbons chauds à la sortie du tunnel de carbonisation subissent une épuration complémentaire par une injection de vapeur d'eau à haute température dans le premier puits intermédiaire;
- les charbons chauds à la sortie du tunnel de carbonisation subissent une injection de produits d'injection liquide ou gazeux à haute température, par exemple de la vapeur d'eau;
- les charbons sont lavés et refroidis par brumisation d'un produit de brumisation, par exemple de l'eau, sous pression à partir de buses d'injection réparties sur le cylindre de refroidissement;
- le tunnel de lessivage est maintenu en dépression, ladite dépression étant par exemple obtenue par l'action d'un condenseur complété par un groupe de mise en vide;
- le tunnel de carbonisation et le tunnel de refroidissement sont maintenus en dépression, ladite dépression étant par exemple obtenue par l'action de laveurs complétée par un groupe de mise en vide;
- le tunnel de lessivage comporte en amont un silo de stockage des matières organiques composé de deux compartiments séparés munis chacun de portes d'entrée et de sortie fonctionnant de façon alternée;
- le tunnel de refroidissement comporte en aval un silo de stockage des charbons composé de deux compartiments séparés munis chacun de portes d'entrée et de sortie fonctionnant de façon alternée;
- les tunnels de lessivage, de carbonisation et de refroidissement, et les premier et deuxième puits intermédiaires, constituent un ensemble étanche depuis le silo amont jusqu'au silo aval;
- les matières organiques sont entraînées dans chaque tunnel par une vis sans fin à vitesse de rotation variable;
- les tunnels de lessivage, de carbonisation et de refroidissement sont de conception modulaire;
- le déversement sur le cylindre de lessivage des matières organiques stockées dans le compartiment en service du silo amont est régulé par un distributeur rotatif situé en pied du silo et recevant alternativement les matières organiques de chaque compartiment. Les matières organiques déversées par ce distributeur sont entraînées à vitesse variable par une vis sans fin tournant dans le cylindre. La paroi de ce cylindre de lessivage est équipée de buses d'injection de vapeur d'eau à haute température et basse pression. Le cylindre de lessivage et le compartiment en service du silo sont maintenus en dépression par un groupe de pompage situé en aval d'un condenseur où la vapeur d'eau est condensée. Le groupe de pompage aspirant dans le condenseur peut être constitué d'une pompe à vide à anneau liquide ou d'un éjecteur à vapeur ou d'une trompe à eau;
- les eaux provenant de la condensation et de la déshydratation, chargées des produits polluants extraits des bois, sont reprises par pompe pour être traitées et recyclées;
- le raccordement du tunnel de lessivage au tunnel de carbonisation est fait par le premier puits intermédiaire. Le déversement des matières organiques stockées dans ce premier puits intermédiaire sur la vis d'entraînement du tunnel de carbonisation est régulé par un distributeur rotatif situé en partie basse de ce puits;
- le tunnel de carbonisation est maintenu en dépression permanente par aspiration des gaz de carbonisation par un groupe de pompage. Les gaz de carbonisation transitent par des condenseurs où ils sont lavés et refroidis avant d'arriver au groupe de pompage. Le groupe de pompage aspirant dans les condenseurs peut être constitué d'une pompe à vide à anneau liquide ou d'un éjecteur à vapeur ou d'une trompe à eau;
- le raccordement du tunnel de carbonisation au tunnel de refroidissement est fait par le deuxième puits intermédiaire. Le déversement des charbons stockés dans ce deuxième puits intermédiaire sur la vis d'entraînement du tunnel de refroidissement est régulé par un distributeur rotatif situé en partie basse de ce puits;
- la paroi du deuxième puits intermédiaire est équipée de buses d'injection de vapeur d'eau à haute température et basse pression. La paroi du cylindre de refroidissement est équipée de buses d'injection d'eau à haute pression. Les charbons refroidis et lavés sont déversés dans un silo de stockage à deux compartiments. Le cylindre de refroidissement et le compartiment en service du silo de stockage des charbons sont maintenus en dépression par un groupe de pompage situé en aval d'un condenseur où la vapeur d'eau et les hydrocarbures résiduels sont refroidis, condensés et lavés. Les eaux de condensation et de lavage des charbons sont reprises pour être traitées et recyclées.

Selon un mode de réalisation préféré de l'invention, le tunnel de carbonisation est mis en température par les fumées générées dans des canons de chauffage utilisant les gaz et selon les besoins les hydrocarbures et/ou les charbons produits dans le traitement des bois.

Selon une disposition préférée de l'invention, le mélange gazeux à haute température en sortie du tunnel de carbonisation, composé de gaz condensables et de gaz incondensables, est refroidi dans une série de condenseurs dans lesquels sont séparés les gaz incondensables de la fraction condensable. Les gaz incondensables sont aspirés en sortie du dernier condenseur par un groupe de pompage constitué de façon préférentielle par une pompe à vide mais pouvant être un éjecteur à vapeur ou une trompe à eau. Les condenseurs sont du type "laveur par aspersion" mais peuvent être du type condenseur à surface.

La fraction condensée en sortie de chaque condenseur est traitée par décantation ou par tout moyen permettant la séparation des hydrocarbures et des eaux d'aspersion. Les eaux récupérées dans cette séparation sont traitées pour l'élimination des traces d'hydrocarbures, des phénols et des divers composés polluants et poussières provenant des matières organiques industrielles.

Selon des dispositions préférées de l'invention, les hydrocarbures récupérés par décantation et les charbons sont, soit utilisés séparément soit mélangés par malaxage pour être stockés et utilisés à des fins de production d'énergie thermique. En particulier les charbons récupérés peuvent être utilisés séparément en tant que charbons à usage domestique ou en tant que charbons actifs pour les traitements industriels des eaux, des gaz et des fumées.

Les gaz de carbonisation incondensables, après le dernier condenseur sont mis en pression à la sortie du groupe de pompage par un surpresseur et brûlés dans les canons de chauffage pour obtenir des fumées à haute température. Ces fumées à haute température serviront à chauffer la paroi rayonnante du cylindre de carbonisation pour la mise en température du four. Ces fumées sont ensuite traitées dans un laveur pour l'élimination des poussières et la mise en conformité réglementaire des rejets.

La cinétique de carbonisation des matières organiques dans le tunnel de carbonisation est suivie par l'analyse en ligne de la fraction incondensable des gaz de pyrolyse en sortie du dernier condenseur. La cinétique de carbonisation est régulée par action sur la vitesse du transfert des matières organiques dans le cylindre à partir de la vitesse de rotation de la vis sans fin.

Selon des dispositions préférées de l'invention, le brassage des matières organiques et des charbons dans les différents tunnels du système est assuré par les vis sans fin d'entraînement à vitesse variable, à fonctionnement indépendant, qui en assurant le remuage permanent lors des mouvements de transfert favorisent successivement et indépendamment la déshydratation, le lessivage et la dépollution à coeur dans le tunnel de lessivage, le transfert thermique pour carboniser les matières organiques et faciliter les dégagements gazeux dans le tunnel de carbonisation et enfin le lavage, la dépollution complémentaire et le refroidissement des charbons dans le dernier tunnel.

L'extraction des mélanges gazeux dans chacun des tunnels est faite par des ouvertures judicieusement placées pour en faciliter l'écoulement convectif tout en favorisant le lessivage des matières organiques et leur déshydratation dans le tunnel de lessivage, le transfert thermique dans la masse des matières organiques dans le tunnel de carbonisation et le refroidissement des charbons dans le dernier tunnel.

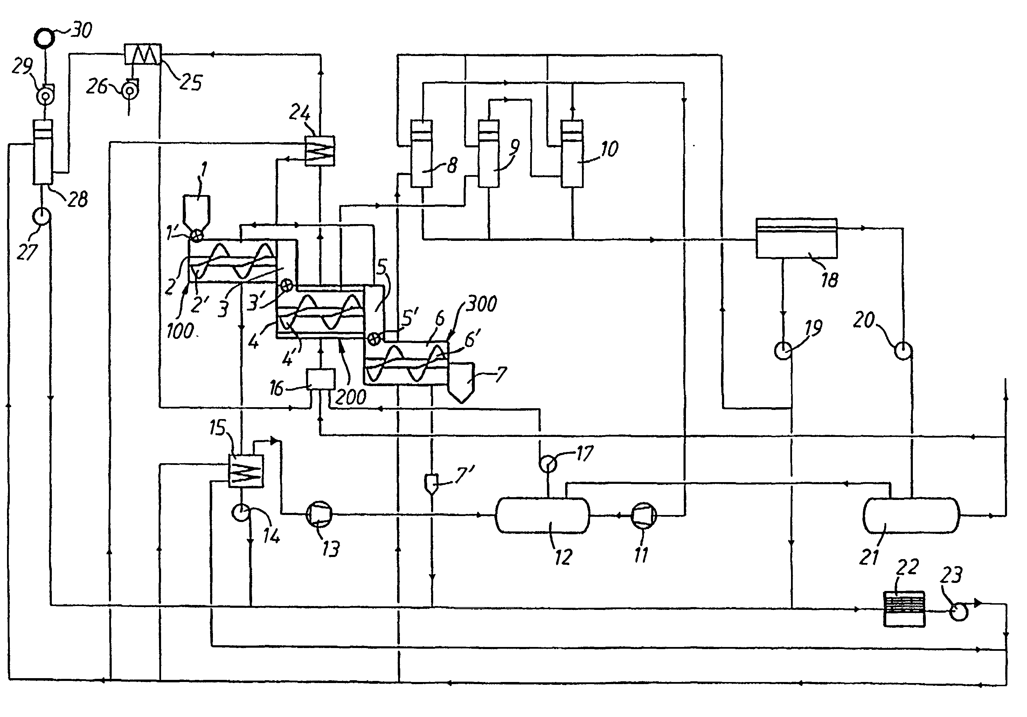

Des objets, caractéristiques et avantages de l'invention ressortent de la description qui suit, donnée à titre d'exemple non limitatif, en regard de la figure annexée représentant un schéma simplifié du système selon l'invention.

Le système selon l'invention comporte un tunnel de lessivage 100 intégrant en un ensemble un silo 1 à deux compartiments pour l'introduction des matières organiques à traiter munis chacun de portes d'étanchéité conçus pour fonctionner en sas et permettre une alimentation continue des matières organiques sans remise à l'air, un cylindre de lessivage 2 à section circulaire dans lequel les matières organiques sont lavées. Le cylindre 2 est équipé d'une vis sans fin 2' à vitesse variable et qui assure le transfert des matières organiques et leur brassage. La paroi du cylindre est munie de buses - non référencées dans le schéma - permettant l'injection de vapeur d'eau à haute température. Les compartiments du silo 1 et le cylindre 2 sont liés par un distributeur rotatif 1' qui permet de régler le déversement des matières organiques dans le cylindre 2. La vapeur d'eau provient du bouilleur 24. La vapeur d'eau non condensée et les eaux provenant de la condensation de la vapeur et de la déshydratation passent dans un condenseur 15. Les eaux sont reprises par le compresseur d'extraction 14 et envoyées vers la station de traitement des eaux 22. Les gaz non condensés en 15 sont aspirés par le groupe de pompage 13 et dirigés vers le bidon de stockage 12 d'où ils sont extraits pour être brûlés en canon de chauffage 16 après mise en pression par le surpresseur 17.

Les matières organiques lavées et déshydratées venant de 2 sont déversées dans le puits 3 d'où ils sont extraits par le distributeur rotatif 3' pour alimenter le tunnel de carbonisation 200. Le puits 3 assure la continuité d'étanchéité entre le tunnel de lessivage et celui de carbonisation. Dans l'exemple considéré, le tunnel de carbonisation est constitué d'un cylindre 4 à section circulaire réalisé à deux parois.

Dans le cylindre intérieur est positionnée une vis sans fin 4' à vitesse variable qui assure le transfert des matières organiques et leur brassage. La mise en température des parois du cylindre est faite par injection dans la double paroi des fumées à haute température générées dans le canon de chauffage 16. Le canon de chauffage 16 est alimenté en air comburant comprimé par 26 et réchauffé par 25, en gaz de carbonisation venant de 12 et comprimé par 17 et en hydrocarbures venant de 21. Les fumées de 16, en sortie de la double paroi du cylindre 4, passent dans le bouilleur 24 puis dans le réchauffeur d'air 25 et enfin dans le laveur 28 d'où elles sont reprises par l'extracteur 29 pour être rejetées par la cheminée 30 dans l'atmosphère. Les eaux de lavage des fumées provenant du laveur 28 sont pompées par la pompe de reprise des eaux 27 pour être envoyées dans la station de traitement des eaux 22. Les gaz de carbonisation produits dans le tunnel de carbonisation sont lavés et refroidis dans une série de laveurs alimentés en eaux à partir du compresseur 19, et dont on en représente deux soit neuf puis dix sans que cette représentation en limite le nombre. Les gaz incondensables qui sortent en tête des laveurs 9 et 10 sont aspirés par le groupe de pompage 11 et les gaz aspirés sont stockés en 12 pour être utilisés pour combustion en 16.

Les hydrocarbures condensés en 9 et 10 sortent en pied des laveurs et sont dirigés vers le bassin de décantation 18. Les eaux décantées sont mises en circulation par le compresseur 19 et recyclées en partie vers les laveurs et en partie traitées dans la station de traitement des eaux 22. Les hydrocarbures concentrés sont mis en circulation par la pompe 20 et stockés en 21 pour une utilisation en 16 et pour toutes autres destinations.

Les charbons obtenus dans le tunnel de carbonisation sont déversés dans le puits 5 d'où ils sont extraits par le distributeur rotatif 5' pour alimenter le tunnel de refroidissement 300. Le puits 5 assure la continuité entre le tunnel de carbonisation 200 et celui de refroidissement 300. La paroi du puits 5 est munie de buses (non représentées) permettant l'injection de vapeur à haute température venant du bouilleur 24 qui assure le complément de dépollution et l'amélioration des caractéristiques physiques des charbons. Le tunnel de refroidissement 300 est composé d'un cylindre 6 à section circulaire dans lequel les charbons sont lavés et refroidis. Le cylindre 6 est équipé d'une vis sans fin 6' à vitesse variable qui assure le transfert des charbons et leur brassage. La paroi du cylindre est munie de buses (non représentées) permettant l'injection d'eau à haute pression qui assure le lavage et le refroidissement par brumisation. Les charbons lavés et refroidis sont déversés dans les compartiments du silo 7 d'où ils seront repris pour utilisation. L'eau de brumisation provient de la station de traitement 22 et est mise en pression par le compresseur 23. Les gaz extraits des charbons par la vapeur d'eau et l'eau de brumisation sont lavés et refroidis en laveur 8 alimenté en eau par 19. Les gaz incondensables sont aspirés en sortie du laveur 8 par le groupe de pompage 11. Les eaux et hydrocarbures sont extraits en pied du laveur 8 et envoyés à la décantation 18. Les eaux non vaporisées sont extraites du tunnel de refroidissement 300 par l'extracteur 7' et dirigées vers une station de traitement des eaux.

La transformation dans le tunnel de carbonisation 200 est avantageusement effectuée en dépression et en absence d'oxygène.

L'homme de l'art comprendra également que la vapeur d'eau à haute température peut être remplacée dans le puits 5, pour obtenir des charbons actifs ayant des caractéristiques particulières, par des gaz condensables et/ou combustibles pouvant être par exemple du gaz naturel ou un mélange de vapeur d'eau, de gaz condensables et de gaz combustibles.

L'eau de brumisation utilisée pour le lavage et le refroidissement des charbons peut être remplacée par des liquides choisis pour améliorer ou faciliter le nettoyage et le refroidissement.

La température de ces gaz peut, selon les besoins, être à un niveau permettant la décomposition des dioxines et des furannes.

On notera que les différents tunnels sont conçus sur une base modulaire, ce qui permet de prendre en compte une évolution de capacité sans que soient remis en cause les investissements déjà effectués.

Le système de l'invention présente de nombreux avantages indiqués ci-après.

Il est applicable aux différents types de bois, à la biomasse et d'une façon générale à toutes matières organiques. Il permet d'obtenir dans un ensemble unique, au cours d'un processus continu des charbons à usage domestique, des charbons actifs à usage industriel, des hydrocarbures et des gaz, chacun de ces produits étant parfaitement débarrassés des produits chimiques déposés en surface ou imprégnés dans la masse des matières organiques. Il permet ainsi de garantir le respect des spécifications de propreté et les réglementations applicables aux rejets. Il est applicable quelle que soit la quantité à traiter par simple variation de la longueur d'un ou des tunnels.

Il permet d'adapter aux caractéristiques qui sont variables des matières organiques à traiter, le temps de lessivage et de déshydratation, le temps de carbonisation et le temps de refroidissement d'une façon indépendante les uns des autres et ainsi d'optimiser le temps total du traitement par action sur la vitesse de rotation des vis d'entraînement.

Il permet d'optimiser la valorisation des matières traitées par le fait que les produits de la carbonisation - hydrocarbures et charbons - sont stockables et transportables permettant une production et utilisation différées de l'énergie.

Les matières organiques traitées selon la présente invention sont par exemple, outre des bois usés, des pneumatiques, des matières plastiques, de la cellulose, des déchets ménagers, etc.

Il va de soi que la description des propositions technologiques qui précède n'a été proposée qu'à titre d'exemple non limitatif et que de nombreuses variantes peuvent être envisagées par l'homme de l'art sans sortir du cadre de l'invention.

## Revendications

1. Système pour la valorisation de matières organiques de récupération, comportant un ensemble de conception modulaire maintenu en dépression sans oxygène, **caractérisé en ce que**:
a) il comporte un tunnel de lessivage (100), comportant un cylindre de lessivage (2), où lesdites matières organiques sont entraînées et brassées, un tunnel de carbonisation (200), comportant un cylindre de carbonisation (4), chauffé à haute température à l'extérieur de celui-ci et où lesdites matières organiques sont entraînées et brassées pour être transformées en gaz et charbons chauds, et un tunnel de refroidissement (300), comportant un cylindre de refroidissement (6), où lesdits charbons chauds sont entraînés et brassés pour être refroidis;
b) le tunnel de lessivage (100) et le tunnel de carbonisation (200) sont reliés par un premier puits intermédiaire (3) pourvu d'un distributeur rotatif (3');
c) le tunnel de carbonisation (200) et le tunnel de refroidissement (300) sont reliés par un deuxième puits intermédiaire (5) pourvu d'un distributeur rotatif (5').

2. Système selon la revendication 1, **caractérisé en ce que** le tunnel de carbonisation (200) est maintenu à une température comprise entre 400°C et 800°C et à une pression partielle comprise entre 40 000 Pa et 90 000 Pa.

3. Système selon la revendication 1, **caractérisé en ce que** le tunnel de carbonisation (200) est constitué d'un cylindre (4) à section circulaire réalisé à deux parois, formant une double paroi.

4. Système selon la revendication 1, **caractérisé en ce que** le tunnel de carbonisation (200) est constitué d'un cylindre (4) à section circulaire comprenant des moyens de chauffage externe choisis parmi des serpentins et des cordons chauffants.

5. Système selon la revendication 2, **caractérisé en ce que** le tunnel de carbonisation (200) est maintenu sans oxygène libre et en température par chauffage du cylindre de carbonisation (4) par des fumées à haute température circulant dans la paroi.

6. Système selon l'une quelconque des revendications 1 à 3, dans lequel les matières organiques sont des bois usés.

7. Système selon la revendication 1, **caractérisé en ce que** les lesdites matières organiques sont soumises dans le tunnel de carbonisation (200) à un rayonnement de la paroi du cylindre de carbonisation (4), par conduction lors du brassage des matières organiques et par convection des gaz de carbonisation qui se dégagent.

8. Système selon la revendication 1, **caractérisé en ce que** les charbons chauds à la sortie du tunnel de carbonisation (200) subissent une épuration complémentaire par une injection de vapeur d'eau à haute température dans le premier puits intermédiaire (3).

9. Système selon l'une quelconque des revendications 1 à 8, **caractérisé en ce que** les charbons chauds à la sortie du tunnel de carbonisation (200) subissent une injection de produits d'injection liquide ou gazeux à haute température.

10. Système selon la revendication 9, **caractérisé en ce que** ledit produit d'injection est de la vapeur d'eau.

11. Système selon la revendication 1, **caractérisé en ce que** les charbons sont lavés et refroidis par brumisation d'un produit de brumisation sous pression à partir de buses d'injection réparties sur le cylindre (6) de refroidissement.

12. Système selon la revendication 11, **caractérisé en ce que** ledit produit de brumisation est de l'eau.

13. Système selon la revendication 1, **caractérisé en ce que** le tunnel de lessivage (100) est maintenu en dépression.

14. Système selon la revendication 13, **caractérisé en ce que** ladite dépression est obtenue par l'action d'un condenseur complété par un groupe de mise en vide.

15. Système selon la revendication 1, **caractérisé en ce que** le tunnel de carbonisation (200) et le tunnel de refroidissement (300) sont maintenus en dépression.

16. Système selon la revendication 13, **caractérisé en ce que** ladite dépression est obtenue par l'action de laveurs complétée par un groupe de mise en vide.

17. Système selon la revendication 1, **caractérisé en ce que** le tunnel de lessivage (100) comporte en amont un silo de stockage des matières organiques (1) composé de deux compartiments séparés munis chacun de portes d'entrée et de sortie fonctionnant de façon alternée.

18. Système selon la revendication 1, **caractérisé en ce que** le tunnel de refroidissement (300) comporte en aval un silo de stockage des charbons (7) composé de deux compartiments séparés munis chacun de portes d'entrée et de sortie fonctionnant de façon alternée.

19. Système selon la revendication 1, **caractérisé en ce que** les tunnels de lessivage, de carbonisation et de refroidissement, respectivement, (100), (200) et (300), et les premier et deuxième puits intermédiaires, respectivement (3) et (5), constituent un ensemble étanche depuis le silo amont (1) jusqu'au silo aval (7).

20. Système selon la revendication 3, **caractérisé en ce que** les fumées à haute température sont générées par un canon de chauffage (16) alimenté par les gaz, les huiles et les charbons produits par la carbonisation.

21. Système selon la revendication 1, **caractérisé en ce que** les matières organiques sont entraînées dans chaque tunnel par une vis sans fin à vitesse de rotation variable.

22. Système selon la revendication 1, **caractérisé en ce que** les tunnels de lessivage, de carbonisation et de refroidissement, respectivement (100), (200) et (300), sont de conception modulaire.

23. Système selon la revendication 1, **caractérisé en ce que** les matières organiques de récupération sont choisies parmi les matières plastiques, la cellulose, les pneumatiques et les déchets ménagers.

## Claims

1. System for enhancing the value of reclaimed organic materials comprising an assembly of modular design kept at low pressure without oxygen, **characterised in that**:
a) it comprises a leaching tunnel (100) comprising a leaching cylinder (2) where said organic materials are carried along and are agitated, a carbonising tunnel (200) comprising a carbonising cylinder (4) heated to a high temperature on its exterior, and where said organic materials are carried along and are agitated in order to be transformed into hot gases and carbons, and a cooling tunnel (300) comprising a cooling cylinder (6) where said hot carbons are carried along and are agitated in order to be cooled;
b) the leaching tunnel (100) and the carbonising tunnel (200) are connected by a first connecting shaft (3) provided with a rotary distributor (3');
c) the carbonising tunnel (200) and the cooling tunnel (300) are connected by a second connecting shaft (5) provided with a rotary distributor (5').

2. System according to claim 1, **characterised in that** the carbonising tunnel (200) is kept at a temperature between 400°C and 800°C and at a partial pressure between 40 000 Pa and 90 000 Pa.

3. System according to claim 1, **characterised in that** the carbonising tunnel (200) is constituted by a cylinder (4) with a circular cross-section configured with two walls forming a double wall.

4. System according to claim 1, **characterised in that** the carbonising tunnel (200) is constituted by a cylinder (4) with a circular cross-section comprising external heating means selected from coils and heating cables.

5. System according to claim 2, **characterised in that** the carbonising tunnel (200) is kept without free oxygen and at temperature by heating of the carbonising cylinder (4) by high temperature fumes circulating in the wall.

6. System according to any one of claims 1 to 3, in which the organic materials are used timber.

7. System according to claim 1, **characterised in that** in the carbonising tunnel (200) said organic materials are subjected to radiation of the wall of the carbonising cylinder (4), by conduction during agitation of the organic materials and by convection of the carbonising gases that are released.

8. System according to claim 1, **characterised in that** the hot carbons at the outlet of the carbonising tunnel (200) are subjected to supplementary cleaning by an injection of water vapour at high temperature in the first connecting shaft (3).

9. System according to any one of claims 1 to 8, **characterised in that** the hot carbons at the outlet of the carbonising tunnel (200) are subjected to an injection of liquid or gaseous injection products at high temperature.

10. System according to claim 9, **characterised in that** said injection product is water vapour.

11. System according to claim 1, **characterised in that** the carbons are washed and cooled by misting with a misting product under pressure from injection nozzles distributed about the cooling cylinder (6).

12. System according to claim 11, **characterised in that** said misting product is water.

13. System according to claim 1, **characterised in that** the leaching tunnel (100) is kept at low pressure.

14. System according to claim 13, **characterised in that** said low pressure is obtained by the action of a condenser supplemented by a vacuum unit.

15. System according to claim 1, **characterised in that** the carbonising tunnel (200) and the cooling tunnel (300) are kept at low pressure.

16. System according to claim 13, **characterised in that** said low pressure is obtained by the action of washers supplemented by a vacuum unit.

17. System according to claim 1, **characterised in that** the leaching tunnel (100) comprises upstream a silo for storing organic materials (1) composed of two separate compartments each provided with inlet and outlet doors operating in an alternating manner.

18. System according to claim 1, **characterised in that** the cooling tunnel (300) comprises downstream a silo for storing carbons (7) composed of two separate compartments each provided with inlet and outlet doors operating in an alternating manner.

19. System according to claim 1, **characterised in that** the leaching, carbonising and cooling tunnels, respectively (100), (200) and (300) and the first and second connecting shafts, respectively (3) and (5) constitute a sealed assembly from the upstream silo (1) to the downstream silo (7).

20. System according to claim 3, **characterised in that** the high temperature fumes are generated by a heating cylinder (15) fed by the gases, oils and the carbons produced by carbonising.

21. System according to claim 1, **characterised in that** the organic materials are carried along in each tunnel by an endless screw with variable rotation speed.

22. System according to claim 1, **characterised in that** the leaching, carbonising and cooling tunnels, respectively (100), (200) and (300) are of modular design.

23. System according to claim 1, **characterised in that** the reclaimed organic materials are selected from plastics materials, cellulose, tyres and household waste.

## Patentansprüche

1. System zur Verwertung von organischen Abfallmaterialien, umfassend einen Aufbau in Modul-Bauweise, gehalten bei Unterdruck ohne Sauerstoff, **dadurch gekennzeichnet, daß**:
a) dieses einen Extraktionstunnel (100) umfaßt, umfassend einen Extraktionszylinder (2), wo die organischen Materialien durchgeführt und umgewälzt werden, einen Carbonisierungstunnel (200), umfassend einen Carbonisierungszylinder (4), der von außen auf hohe Temperatur erhitzt wird, und wo die organischen Materialien durchgeführt und umgewälzt werden, um in Gas und heiße Kohle umgewandelt zu werden, und einen Abkühlungstunnel (300), umfassend einen Abkühlungszylinder (6), wo die heiße Kohle durchgeführt und umgewälzt wird, um abgekühlt zu werden;
b) der Extraktionstunnel (100) und der Carbonisierungstunnel (200) durch einen ersten Zwischenschacht (3), versehen mit einem Rotationsverteiler (3'), verbunden sind;
c) der Carbonisierungstunnel (200) und der Abkühlungstunnel (300) durch einen zweiten Zwischenschacht (5), versehen mit einem Rotationsverteiler (5'), verbunden sind.

2. System nach Anspruch 1, **dadurch gekennzeichnet, daß** der Carbonisierungstunnel (200) bei einer Temperatur zwischen 400 und 800°C und einem partiellen Druck zwischen 40.000 Pa und 90.000 Pa gehalten wird.

3. System nach Anspruch 1, **dadurch gekennzeichnet, daß** der Carbonisierungstunnel (200) aus einem Zylinder (4) mit kreisförmigem Querschnitt mit zwei Wänden, die eine Doppelwand bilden, aufgebaut ist.

4. System nach Anspruch 1, **dadurch gekennzeichnet, daß** der Carbonisierungstunnel (200) aus einem Zylinder (4) mit kreisförmigem Querschnitt, umfassend externe Heizmittel, ausgewählt aus Heizschlangen und Heizlitzen, aufgebaut ist.

5. System nach Anspruch 2, **dadurch gekennzeichnet, daß** der Carbonisierungstunnel (200) ohne freien Sauerstoff und durch Heizen des Carbonisierungszylinders (4) mit in der Wand zirkulierenden heissen Dämpfen auf der Temperatur gehalten wird.

6. System nach irgendeinem der Ansprüche 1 bis 3, worin die organischen Materialien gebrauchte Hölzer darstellen.

7. System nach Anspruch 1, **dadurch gekennzeichnet, daß** die organischen Materialien im Carbonisierungstunnel (200) durch Leitung beim Umwälzen der organischen Materialien und durch Konvektion der Carbonisierungsgase, die sich freisetzen, einer Strahlung von der Wand des Carbonisierungszylinders (4) unterzogen werden.

8. System nach Anspruch 1, **dadurch gekennzeichnet, daß** die heiße Kohle am Austritt des Carbonisierungstunnels (200) einer ergänzenden Reinigung durch Einspritzen von Wasserdampf mit hoher Temperatur in den ersten Zwischenschacht (3) unterzogen wird.

9. System nach irgendeinem der Ansprüche 1 bis 8, **dadurch gekennzeichnet, daß** die heiße Kohle am Austritt des Carbonisierungstunnels (200) einem Einspritzen von flüssigen oder gasförmigen Einspritzprodukten mit hoher Temperatur unterzogen wird.

10. System nach Anspruch 9, **dadurch gekennzeichnet, daß** die Einspritzprodukte Wasserdampf darstellen.

11. System nach Anspruch 1, **dadurch gekennzeichnet, daß** die Kohle durch Vernebelung eines Vernebelungsprodukts unter Druck aus Injektionsdüsen, verteilt auf dem Abkühlungszylinder (6), gewaschen und abgekühlt wird.

12. System nach Anspruch 11, **dadurch gekennzeichnet, daß** das Vernebelungsprodukt Wasser darstellt.

13. System nach Anspruch 1, **dadurch gekennzeichnet, daß** der Extraktionstunnel (100) bei Unterdruck gehalten wird.

14. System nach Anspruch 13, **dadurch gekennzeichnet, daß** der Unterdruck erhalten wird durch Wirkung eines Kondensators, vervollständigt mit einer Einrichtung zur Erzeugung von Vakuum.

15. System nach Anspruch 1, **dadurch gekennzeichnet, daß** der Carbonisierungstunnel (200) und der Abkühlungstunnel (300) bei Unterdruck gehalten werden.

16. System nach Anspruch 13, **dadurch gekennzeichnet, daß** der Unterdruck erhalten wird durch Wirkung von Waschern, vervollständigt mit einer Einrichtung zur Erzeugung von Vakuum.

17. System nach Anspruch 1, **dadurch gekennzeichnet, daß** der Extraktionstunnel (100) oberhalb einen Lagerspeicher für organische Materialien (1) umfaßt, zusammengesetzt aus zwei getrennten Fächern, jeweils versehen mit Ein- und Austrittstüren, die alternierend funktionieren.

18. System nach Anspruch 1, **dadurch gekennzeichnet, daß** der Abkühlungstunnel (300) unterhalb einen Lagerspeicher für Kohle (7) umfaßt, zusammengesetzt aus zwei getrennten Fächern, die jeweils mit Ein- und Austrittstüren versehen sind, die alternierend funktionieren.

19. System nach Anspruch 1, **dadurch gekennzeichnet, daß** die Extraktions-, Carbonisierungs- und -Abkühlungstunnel, entsprechend (100), (200) und (300), und der erste und zweite Zwischenschacht, entsprechend (3) und (5), vom oberen Speicher (1) bis zum unteren Speicher (7) eine geschlossene Einheit darstellen.

20. System nach Anspruch 3, **dadurch gekennzeichnet, daß** die Dämpfe mit hoher Temperatur erzeugt werden durch eine Heizröhre (16), versorgt durch die Gase, die Öle und die Kohle, die durch die Carbonisierung erzeugt werden.

21. System nach Anspruch 1, **dadurch gekennzeichnet, daß** die organischen Materialien mit einer Schnecke mit variabler Rotationsgeschwindigkeit durch jeden Tunnel geführt werden.

22. System nach Anspruch 1, **dadurch gekennzeichnet, daß** die Extraktions-, Carbonisierungs- und Abkühlungstunnel, entsprechend (100), (200) und (300), von Modular-Bauweise sind.

23. System nach Anspruch 1, **dadurch gekennzeichnet, daß** die organischen Abfallmaterialien ausgewählt sind aus Plastikmaterialien, Cellulose, Reifen und Haushaltsabfällen.
